# EUROPÄISCHE PATENTSCHRIFT

(11) **EP 1 761 020 B1**
(45) Veröffentlichungstag und Bekanntmachung des Hinweises auf die Patenterteilung: **10.01.2018**
(21) Anmeldenummer: 05019015.6
(22) Anmeldetag: 01.09.2005
(51) Int. Cl.: H04M 15/00, H04L 12/14

(54) **Vergebührung von Kommunikationsverbindungen unter Vermeidung der Korrelation von Gebührendatensätzen von mehr als einem Netzelement**
Billing of communication connections while avoiding the correlation of call detail records of more than one network element
Facturation de liaisons de communication en évitant la corrélation d'enregistrements détaillés des appels provenant de plusieurs éléments réseau

(43) Veröffentlichungstag der Anmeldung: 07.03.2007
(73) Patentinhaber: Nokia Solutions and Networks GmbH & Co. KG, 81541 Munich (DE)
(72) Erfinder: Kieselmann, Gerhard, Dr., 80805 München (DE); Milinski, Alexander, 81371 München (DE); Weiss, Peter, 1150 Wien (AT)
(74) Vertreter: Weidel, Gottfried

(56) Entgegenhaltungen:
- WO-A-2004/045141
- US-A1- 2002 127 995
- US-A1- 2002 191 597
- US-A1- 2004 152 444
- "Internet Protocol (IP) multimedia call control protocol based on Session Initiation Protocol (SIP) and Session Description Protocol (SDP); Stage 3 (Release 7) (3GPP TS 24.229 version 7.0.0 Release 6); ETSI" ETSI STANDARDS, EUROPEAN TELECOMMUNICATIONS STANDARDS INSTITUTE, SOPHIA-ANTIPO, FR, Juni 2005 (2005-06), XP002369255 ISSN: 0000-0001
- "Universal Mobile Telecommunications System (UMTS); Telecommunication management; Charging management; Charging architecture and principles (3GPP TS 32.240 version 6.2.0 Release 6); ETSI TS 132 240" ETSI STANDARDS, EUROPEAN TELECOMMUNICATIONS STANDARDS INSTITUTE, SOPHIA-ANTIPO, FR, Bd. 3-SA5, Nr. V620, Juni 2005 (2005-06), XP014030706 ISSN: 0000-0001
- TECHNICAL SPECIFICATION GROUP SERVICES AND SYSTEM ASPECTS: "TSGS#23(04)0138 Rel-5 CR 32.200 Fill-in the empty clauses with SA5-reviewed material from SA2's TR 23.815"[Online] 18. März 2004 (2004-03-18), Seiten 1-4, XP002369256 Gefunden im Internet: URL:http://www.3gpp.org/ftp/tsg_sa/TSG_SA/ TSGS_23/Docs/PDF/SP-040138.pdf> [gefunden am 2006-02-21]

## Beschreibung

Die Erfindung betrifft Verfahren und Vorrichtungen zur Gebührenbestimmung für mindestens eine Verbindung durch mindestens ein Telekommunikationsnetz.

Aufgrund des Zusammenwachsens von Sprach- und Datennetzen und der Einführung neuer Dienste wird auch die Teilnehmervergebührung zunehmend komplizierter. Verschiedene Netzelemente sind am Aufbau einer Verbindung beteiligt. Zum Beispiel kann ein Anruf von einem IMS gemäß 3GPP Spezifikationen in das bestehende Festnetz allein auf der A-Seite (also im Netz auf der ausgehenden Seite) folgenden Pfad nehmen:
Endgerät (z.B. Handy) -> Proxy-CSCF -> Serving-CSCF -> erster Applikationsserver -> S-CSCF -> zweiter Applikationsserver -> BGCF -> MGCF -> [PSTN] usw. (Netzelementbezeichnungen gemäß 3GPP TS 23.002).

Gemäß 3GPP Standards können alle diese Netzelemente vergebührungsrelevante Informationen liefern und sogenannte "Charging Data Records" (= CDRs = Gebührendatensätze) schreiben. Der Netzbetreiber steht vor dem Problem, diese Informationen für die Teilnehmervergebührung zusammenzufassen, um dem Teilnehmer diesen Anruf einmal einheitlich in Rechnung zu stellen.

Für die Lösung des Problems gibt es folgende Ansätze:
1. Der einfachste Ansatz ist, a priori ein Netzelement zu identifizieren, dessen CDRs allein relevant sind. Mit einer zunehmenden Dienstevielfalt wird dies schwieriger.
2. Als Verfeinerung des ersten Ansatzes wird abhängig vom Dienst jeweils ein Endgerät ausgewählt. Das bedeutet aber, dass alle Netzelemente, die CDRs schreiben, so konfiguriert werden müssen, dass sie den Dienst erkennen, für den sie verantwortlich sind (und da es keine Regel ohne Ausnahme gibt, wird das in der Praxis komplex).
3. Korrelation von Charging Tickets mittels Nutzerkennung und Zeitstempel: Für die Endnutzervergebührung werden mehrere Tickets herangezogen. Das Billing-System oder ein mediation device muss die verschiedenen Tickets in der Nachbearbeitung korrelieren. Dafür werden Nutzerkennung und Zeitstempel herangezogen. Der Nachteil bei Netzelement/Zeitstempel ist in erster Linie, dass nicht immer klar ist, ob es sich um einen einheitlichen Dienst handelt (z.B. Telefonat als "Netmeeting" mit Filesharing) oder um zwei zufällig parallele Dienste (z.B. Nutzer surft während eines Telefonats auch in Internet). Der zweite Nachteil ist die Komplexität in der Nachbearbeitung, denn einem Ticket kann nicht angesehen werden, ob es dazu weitere gibt, die Suche nach Nutzerkennung und Zeitstempel ist komplex.
4. Korrelation mittels spezieller Kennziffer: Für die Endnutzervergebührung werden mehrere Tickets herangezogen. Das Billing-System oder ein mediation device muss die verschiedenen Tickets in der Nachbearbeitung korrelieren. Dafür werden eine (oder mehrere) dafür definierte Kennziffern herangezogen, das sind so genannte Korrelations-Identifier wie die in 3GPP definierten IMS Charging Identifier (ICID) und GPRS Charging Identifier (GCID), siehe 3GPP Spezifikationen TS 23.060, TS 24.229, TS 32.260). Der Nachteil bei Verwendung eines Charging-Identifiers ist, dass er von allen Netzelementen unterstützt werden muss und vergleichsweise komplex ist. Die Komplexitität betrifft hier nicht nur die Netzelemente, sondern wie oben auch die Nachbearbeitung im mediation device oder Billing-System. Man sieht ja einem Ticket nicht an, ob es dazu weitere gibt, und dann muss nach der Kennziffer gesucht werden.

Stand der Technik auf dem Gebiet der Erfindung kann in der Druckschrift WO 2004/045141 A gefunden werden, die ein Verfahren zur Vermeidung einer doppelten Gebührenberechnung für einen Dienst in einem Telekommunikationssystem offenbart.

Insbesondere bezieht sich diese Druckschrift auf ein mehrschichtiges Telekommunikationssystem, bei dem sowohl eine Gebührenberechnungsfunktion einer ersten Schicht als auch eine Gebührenberechnungsfunktion einer zweiten Schicht zur Verarbeitung von Gebührenberechnungsdaten der ersten Schicht in der Lage sind. Zur Vermeidung, dass Gebührenberechnungsdaten der ersten Schicht doppelt verarbeitet werden, informiert eine Funktion der ersten Schicht die Gebührenberechnungsfunktion der zweiten Schicht darüber, ob die Gebührenberechnungsfunktion der zweiten Schicht die Gebührenberechnung für beide Schichten übernimmt.

Weiterer Stand der Technik kann in der Druckschrift US 2004/152444 A1 gefunden werden, die Gebührenberechnung in Telekommunikationsnetzwerken thematisiert, wobei insbesondere sitzungsspezifische Ereignisdaten zur Gebührenberechnung gesammelt werden.

Dabei wird eine Sitzung mittels mehrerer Netzwerkeinheiten verbunden, welche die sitzungsspezifischen Ereignisdaten erzeugen. Anstatt für ein Sammeln der sitzungsspezifischen Ereignisdaten diese von einer an der Sitzung beteiligten Netzwerkeinheit zur nächsten zu übertragen, werden diese in Echtzeit in zentralisierter Weise von jeder Netzwerkeinheit selbst an eine Sammelnetzwerkeinheit übertragen. Dabei wählt eine an der Sitzung beteiligte Netzwerkeinheit die Sammelnetzwerkeinheit aus einem Satz von bekannten Sammelnetzwerkeinheiten aus und informiert die anderen an der Sitzung beteiligten Netzwerkeinheiten darüber.

Aufgabe der vorliegenden Erfindung ist es, eine effiziente präzise Gebührenerfassung zu ermöglichen. Die Aufgabe wird jeweils durch den Gegenstand der unabhängigen Patentansprüche gelöst.

Indem mindestens ein Netzelement weiteren Netzelementen Informationen darüber mitteilt, ob es einen Gebührendatensatz (Ticket) schreibt, kann (gemäß unterschiedlichen Ausgestaltungen der Erfindung jeweils) effizient und zuverlässig eine zutreffende Gebührenberechnung für eine Verbindung zur Erstellung einer Rechnung für mindestens einen Teilnehmer an der Verbindung ermöglicht werden.

Die Erfindung löst das Problem auf einfache Weise durch ein Verfahren gemäß Anspruch 1, einem zur Durchführung des Verfahrens angepassten Telekommunikationsnetz gemäß Anspruch 10 und einem entsprechend angepassten Netzelement gemäß Anspruch 11. Die Erfindung ermöglicht, dass das Ticket jenes Netzelements verwendet wird, das über die für die Vergebührung relevante Information verfügt, ohne dass ein komplexer Korrelierungs-Prozess notwendig ist. Stattdessen kann die Erstellung nicht relevanter Tickets unterdrückt werden oder nicht relevante Tickets können z.B. als solche gekennzeichnet werden. Dies kann erheblichen Aufwand in der Nachbearbeitung ersparen. Zudem ist die Implementierung für die Netzelemente einfacher als die Unterstützung spezieller Korrelierungskennziffern, die erst geniert werden müssten und deren globale Eindeutigkeit sichergestellt werden muss.

Nach einer bevorzugten Ausgestaltung der Erfindung wird von einem ersten Netzelement, das weitere Netzelemente darüber informiert, dass nur es selbst Gebührendatensätze (Tickets) an eine Gebührenbestimmungseinrichtung senden möchte (mindestens) ein Gebührendatensatz (Ticket) an die Gebührenbestimmungseinrichtung gesendet, während von den weiteren Netzelementen die vom erst genannten Netzelement hierüber informiert werden, Gebührendatensätze entweder nicht an eine Gebührenbestimmungseinrichtung gesendet werden oder beispielsweise mit einem Hinweis an die Gebührenbestimmungseinrichtung gesendet werden, der angibt, dass nur vom erst genannten Netzelement stammende Gebührendatensätze zu verwenden sind. Durch jede dieser Ausgestaltungen wird effizient und wirkungsvoll gewährleistet, dass einerseits seitens der Netzelemente klar festgelegt ist, welches Gebührendatensätze an eine Gebührenbestimmungseinrichtung senden muss und andererseits wird seitens einer Gebührenbestimmungseinrichtung eine (aufgrund der Minimierung der dort eingehenden Anzahl von Gebührendatensätze) eine einfache und effiziente und trotzdem gute Gebührenbestimmung ermöglicht.

Für die Festlegung, welches Netzelement als im Anspruch 1 erst- genanntes Netzelement bestimmte Gebührendatensätze an eine Gebührenbestimmungseinrichtung zur dortigen Bestimmung der Gebühr für eine Verbindung (oder für mehrere Verbindungen) sendet, besteht eine Vielzahl von Möglichkeiten.

Nach einer Ausgestaltung der Erfindung kann das im Patentanspruch 1 erst- genannte Netzelement immer dann Gebührendatensätze (CDRs = Tickets = Gebührendatensätze) aufzeichnen und an eine Gebührenbestimmungseinrichtung senden, wenn es am Rufaufbau beteiligt ist. (Andernfalls kann ein anderes Netzelement das im Patenanspruch erst- genannte Netzelement sein.).

(Eine Übermittlung von Gebührendatensätzen von einem der Netzelemente zu einer Gebührenbestimmungseinrichtung kann direkt oder indirekt, z.B. über andere Netzelemente, erfolgen.)

Weitere Merkmale und Vorteile der Erfindung ergeben sich aus den Patentansprüchen und der nachfolgenden Beschreibung eines Ausführungsbeispiels anhand der Zeichnung. Dabei zeigt:
- Figur 1: ein Beispiel für beim Aufbau einer Verbindung zwischen einem Endgerät und Netzelementen übersandte Nachrichten und
- Figur 2: ein weiteres Beispiel für beim Verbindungsaufbau übersandte Nachrichten.

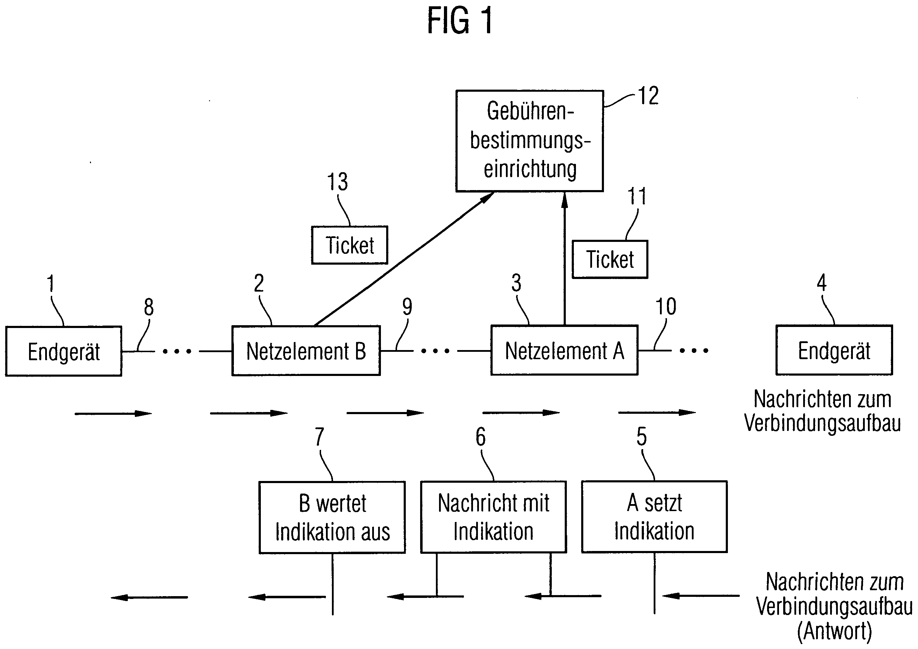

In Figur 1 werden in einem Endgerät 1 beim Aufbau einer Verbindung durch mindestens ein Telekommunikationsnetz (1,2,8,9,10..) über beispielhaft dargestellte Netzelemente B (Bezugszeichen 2) und A (Bezugszeichen 3) und weitere an sich dem Fachmann bekannte Netzelemente (wie Vermittlungseinrichtungen etc.) zu einem weiteren Endgerät 4 im gleichen oder einem anderen Telekommunikationsnetz den Verbindungsaufbau unterstützende Nachrichten wie von den Pfeilen in Figur 1 angedeutet zwischen Netzelementen sowie zwischen dem Endgerät und Netzelementen übermittelt. Beispielsweise kann das Netzelement A (3) festlegen, dass nur es (3) Gebührendatensätze (Tickets/CDR) an eine Gebührenbestimmungseinrichtung senden möchten (Schritt 5), und sendet eine Nachricht 6 mit einem Hinweis (Indikation) hierzu an weitere Netzelemente wie im dargestellten Beispiel an das Netzelement B (2), worauf das Netzelement B (2) im Schritt 7 diese mit einer Nachricht vom Netzelement A erhaltene Indikation auswertet und entsprechend der Auswertung keine Gebührendatensätze mehr an eine Gebührenbestimmungseinrichtung sendet oder Gebührendatensätze nur mit einem Hinweis (der angibt dass Gebührendatensätze vom Netzelement B nicht zu berücksichtigen sind) an eine Gebührenbestimmungseinrichtung sendet und/oder gegebenenfalls auch keine Gebührendatensätze (Tickets/CTRs) erstellt.

Die Erfindung ermöglicht, dass Gebühren auch für den Kunden nachvollziehbar sein sollten. Erfahrungsgemäß genügen daher in der Regel für jede Verbindung die Informationen eines Netzelements; es ist jedoch nicht für jede Verbindung dasselbe Netzelement, welches über diese Information verfügt. Erfindungsgemäß können die verschiedenen Netzelemente Informationen darüber austauschen, ob sie selbst ein Ticket schreiben. Ein Netzelement, welches ein Ticket schreibt, teilt dies in einer Nachricht (zweckmäßig beim Rufaufbau) den anderen Netzelementen mit einer speziellen Indikation (=Hinweis) mit. Die anderen Netzelemente berücksichtigen dies bei der Erstellung ihrer Tickets und unterdrücken beispielsweise daraufhin die Erstellung von Tickets (oder markieren ihre Tickets als nicht relevant für die EndnutzerVergebührung, denn häufig werden die CDRs auch für statistische Zwecke ausgewertet oder für die Abrechnung zwischen Netzbetreibern verwendet).
Für die Indikation 6 gibt es eine Vielzahl von Möglichkeiten, wie insbesondere die folgenden:
Ein Netzelement A (3) schreibt immer dann CDRs, wenn es an einem Rufaufbau beteiligt ist. Ist hingegen das Netzelement A (3) nicht am Ruf beteiligt so werden die vom Netzelement B (2) stammenden CDRs verwendet. Für dieses Szenario genügt eine einfache Indikation beim Rufaufbau von A (3) an B (2), dass das Netzelement A (3) im Pfad (der Verbindung) ist und ein Ticket schreibt. Findet B diese Indikation, so unterdrückt es die Erstellung (oder Weiterleitung) von Tickets für diesen Ruf (oder markiert die CDRs entsprechend).

Ein konkretes Beispiel für solch ein Szenario im IMS/FMC Umfeld ist der Übergang in ein PSTN. In diesem Fall verfügt alleine die MGCF über die nötige Information für die Vergebührung, ihre Tickets sind relevant. In anderen Fällen wird die Vergebührung aber von einem anderen Netzelement (CSCF oder voice application server) vorgenommen, das nicht weiß, ob der Ruf in das PSTN weitergeleitet werden wird (oder aus dem PSTN kommt). In der vorgeschlagenen Lösung setzt die MGCF beim Rufaufbau daher eine Indikation, dass sie im Pfad ist und das Ticket schreibt. Hier ist also A = MGCF, B = Voice Server.

Wegen komplexerer Szenarien, die durch Rufweiterleitung etc entstehen können kann es oft nicht genügen, dass der beim Rufaufbau z.B. bei SIP aufgezeichnete Pfad ausgewertet wird. Diese Szenarien erfordern auch eine Konfiguration wie das Netzelement B nach Auswertung der Information verfährt (also wann es die Indikation von A beispielsweise entfernt und wann nicht). Insbesondere genügt es in der Regel nicht, in einem Netzelement Routing- Information auszuwerten, um festzustellen, ob Netzelement B am Rufaufbau beteiligt ist, sondern die Indikation, wie sie hier beschrieben wird, ist tatsächlich auch dann erforderlich, wenn solche Routinginformation zur Verfügung steht (z.B.: im SIP Route header).

Im obigen Beispiel mit MGCF kann speziell die terminating IOI (siehe 3GPP TS 24.229, TS 32.260, IETF RFC 3455) zu diesem Zweck verwendet werden. Generell muss die Verwendung einer solchen Indikation projektspezifisch definiert und konfiguriert werden, solange es keine standardisierten Indikationen gibt.

Im Unterschied zur Korrelierung mit einer Kennziffer verwendet hier Netzelement A für jeden Ruf die gleiche Indikation, während es bei der Benutzung einer Kennziffer jedes Mal eine andere Kennziffer verwenden müsste.

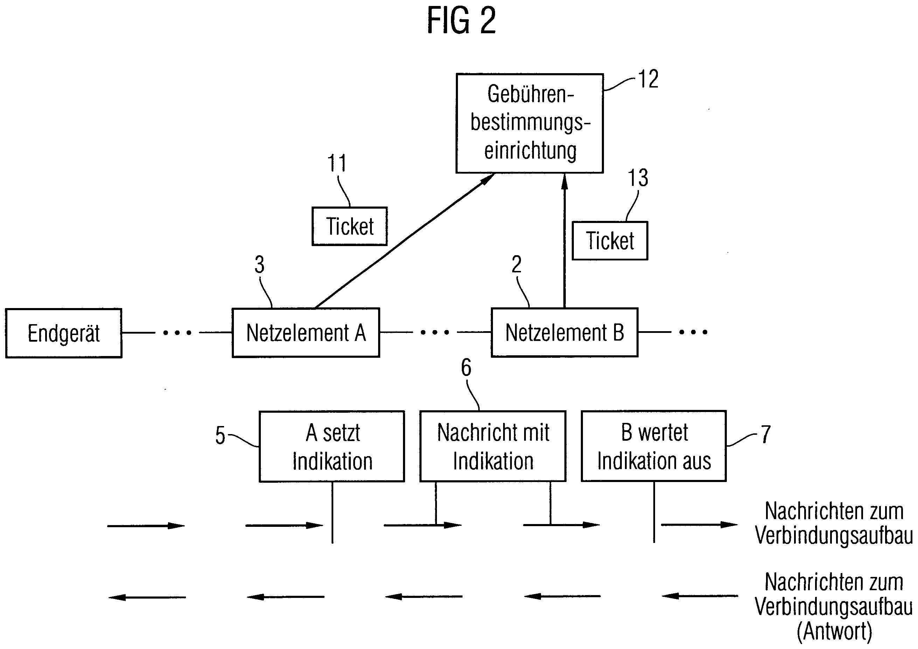

Fig. 2 zeigt ein weiteres Anwendungsbeispiel für einen Hinweis (Indikation) in der Antwort beim Rufaufbau (dies entspricht dem oben geschilderten konkreten Beispiel).

## Patentansprüche

1. Verfahren zur Gebührenbestimmung für mindestens eine Verbindung (8, 9, 10) durch mindestens ein Telekommunikationsnetz (2, 3),
wobei mehrere Netzelemente (2, 3) des Telekommunikationsnetzes Gebührendatensätze (11, 13) generieren, obwohl die Gebührendatensätze eines an der Verbindung beteiligten Netzelements für die Gebührenbestimmung der Verbindung genügen,
wobei nur ein einziges an der Verbindung beteiligtes erstes Netzelement (3) des Telekommunikationsnetzes, das alle für die Gebührenbestimmung der Verbindung notwendigen Gebührendatensätze (11) generiert, festlegt, dass nur das an der Verbindung beteiligte erste Netzelement (3) Gebührendatensätze an eine Gebührenbestimmungseinrichtung senden möchte,
wobei das an der Verbindung beteiligte erste Netzelement (3) daraufhin mindestens ein an der Verbindung beteiligtes weiteres Netzelement (2) des Telekommunikationsnetzes mittels einer Nachricht zum Verbindungsaufbau über die Festlegung informiert, und wobei die an der Verbindung beteiligten weiteren Netzelemente (2) auf Grund der Nachricht keine Gebührendatensätze (13) an die Gebührenbestimmungseinrichtung (12) senden oder die von den an der Verbindung beteiligten weiteren Netzelemente (2) versendeten Gebührendatensätze (13) als nicht relevant gekennzeichnet werden, und
wobei von einer Gebührenbestimmungseinrichtung (12) nur von dem erst- genannten (3) der Netzelemente stammende Gebührendatensätze (13) für die Bestimmung der Gebühr für die mindestens eine Verbindung (8, 9, 10) berücksichtigt werden.

2. Verfahren nach Anspruch 1, **dadurch gekennzeichnet, dass** ein von einem Netzelement (2) an eine Gebührenbestimmungseinrichtung (12) gesendeter Hinweis angibt, dass ein von den weiteren Netzelementen (2) stammender Gebührendatensatz (13) nicht bei der Gebührenbestimmung in der Gebührenbestimmungseinrichtung (12) zu berücksichtigen ist.

3. Verfahren nach einem der vorhergehenden Ansprüche, **dadurch gekennzeichnet, dass** das erstere Netzelemente (3) einen die Nichtrelevanz von von weiteren Netzelementen (2) stammenden Gebührendatensätzen an die Gebührenbestimmungseinrichtung (12) sendet.

4. Verfahren nach einem der vorhergehenden Ansprüche, **dadurch gekennzeichnet, dass** die weiteren Netzelemente (2) keine Gebührendatensätze (13) an die Gebührenbestimmungseinrichtung (12) senden.

5. Verfahren nach einem der vorhergehenden Ansprüche, **dadurch gekennzeichnet, dass** das erstere Netzelement (3) einen Hinweis (6) an die weitere Netzelemente (2) sendet, der die Angabe repräsentiert, dass nur vom ersteren Netzelement (3) stammende Gebührendatensätze (11) bei der Gebührenbestimmung zu berücksichtigen sind, und dass die weiteren Netzelemente (2) darauf gemäß einen der Ansprüche 2 und 4 reagieren.

6. Verfahren nach einem der vorhergehenden Ansprüche, **dadurch gekennzeichnet, dass** das erstere Netzelement (3) einen Hinweis anlässlich eines Rufaufbaus an mindestens ein weiteres Netzelement (2) sendet.

7. Verfahren nach einem der vorhergehenden Ansprüche, **dadurch gekennzeichnet, dass** das erstere Netzelement (3) das vor den weiteren Netzelementen (2) über den Rufaufbau informierte Netzelement ist.

8. Verfahren nach einem der vorhergehenden Ansprüche, **dadurch gekennzeichnet, dass** ein Netzübergangelement an einem Netzübergang in ein weiteres Telekommunikationsnetz das erstere Netzelement (3) ist.

9. Verfahren nach einem der vorhergehenden Ansprüche, **dadurch gekennzeichnet, dass** das Telekommunikationsnetz ein zellulares Mobilfunknetz ist.

10. Telekommunikationsnetz zur Durchführung des Verfahrens nach einem der vorhergehenden Verfahrensansprüche, wobei in dem Telekommunikationsnetz mehrere Netzelemente (2, 3) Gebührendatensätze (11, 13) generieren, obwohl die Gebührendatensätze eines an der Verbindung beteiligten Netzelements für die Gebührenbestimmung der Verbindung genügen,
- mit einem an der Verbindung beteiligten ersten Netzelement (3), das dazu ausgebildet ist, festzulegen, dass nur es selbst Gebührendatensätze an eine Gebührenbestimmungseinrichtung senden möchte, und dazu ausgebildet ist an mindestens ein weiteres an der Verbindung beteiligten Netzelement(2) des Telekommunikationsnetzes eine Nachricht mit einen Hinweis zu senden, der angibt, dass nur vom ersten Netzelement (3) stammende Gebührendatensätze bei einer Gebührenbestimmung in einer Gebührenbestimmungseinrichtung zu berücksichtigen sind,
- mit weiteren an der Verbindung beteiligten Netzelementen die dazu ausgebildet sind auf Grund der Nachricht, keine Gebührendatensätze (13) an die Gebührenbestimmungseinrichtung (12) zu senden oder die von ihnen versendeten Gebührendatensätze als nicht relevant zu kennzeichnen (2), und
- mit einer Gebührenbestimmungseinrichtung (12), die so ausgelegt ist, dass sie nur vom ersten Netzelement (3) stammende Gebührendatensätze für die Bestimmung der Gebühr für die mindestens eine Verbindung berücksichtigt.

11. Netzelement (3) für ein Telekommunikationsnetz, in dem mehrere Netzelemente (2, 3) Gebührendatensätze (11, 13) generieren, obwohl die Gebührendatensätze eines an einer Verbindung beteiligten Netzelements für die Gebührenbestimmung der Verbindung genügen, wobei das an der Verbindung beteiligte Netzelement (3) dazu ausgebildet ist, festzulegen, dass nur es selbst Gebührendatensätze an eine Gebührenbestimmungseinrichtung senden möchte, und dazu ausgebildet ist an der Verbindung beteiligten weiteren Netzelementen (2) eine Nachricht mit einem Hinweis zu senden, der angibt, dass nur vom erst-genannten Netzelement (3) stammende Gebührendatensätze bei einer Gebührenbestimmung in einer Gebührenbestimmungseinrichtung zu berücksichtigen sind, so dass an der Verbindung beteiligte weitere Netzelemente (2) keine Gebührendatensätze (13) an die Gebührenbestimmungseinrichtung (12) senden oder versendete Gebührendatensätze (13) als nicht relevant kennzeichnen und so dass eine Gebührenbestimmungseinrichtung nur von dem Netzelement stammende Gebührendatensätze für die Bestimmung der Gebühr für die Verbindung berücksichtigt.

## Claims

1. Method of charge determination for at least one connection (8, 9, 10) via at least one telecommunication network (2, 3)
wherein multiple network elements (2, 3) of the telecommunication network generate charge data sets (11, 13), although the charge data sets of one network element involved in the connection suffice for the charge determination of the connection,
wherein only one single first network element (3) of the telecommunication network involved in the connection which generates each of the charge data sets (11) necessary for the charge determination of the connection stipulates that only the first network element (3) involved in the connection wants to send charge data sets to a charge determination means,
wherein, as a result, the first network element (3) involved in the connection informs at least one further network element (2) of the telecommunication network involved in the connection on the stipulation by means of a message for connection establishment, and
wherein, based on the message, the further network elements (2) involved in the connection do not send charge data sets (13) to the charge determination means (12), or the charge data sets (13) sent by the further network elements (2) involved in the connection are marked as not relevant, and
wherein only charge data sets (13) originating from the first-mentioned (3) of the network elements are considered by a charge determination means (12) for the determination of the charge for the at least one connection (8, 9, 10).

2. Method according to claim 1, wherein an indication sent from a network element (2) to a charge determination means (12) specifies that a charge data set (13) originating from the further network elements (2) is not to be considered for the charge determination of the charge determination means (12).

3. Method according to any of the foregoing claims, wherein the first network element (3) sends the non-relevance of charge data sets originating from further network elements (2) to the charge determination means (12)

4. Method according to any of the foregoing claims, wherein the further network elements (2) do not send charge data sets (13) to the charge determination means (12).

5. Method according to any of the foregoing claims, wherein the first network element (3) sends an indication (6) to the further network elements (2) which represents the statement that only charge data sets (11) originating from the first network element (3) are to be considered for the charge determination, and wherein the further network elements (2) react thereon according to any of claims 2 and 4.

6. Method according to any of the foregoing claims, wherein the first network element (3) sends an indication on occasion of a call establishment to at least one further network element (2).

7. Method according to any of the foregoing claims, wherein the first network element (3) is the network element which is informed on the call establishment before the further network elements (2).

8. Method according to any of the foregoing claims, wherein a network transfer element at a network transfer to a further telecommunication network is the first network element (3).

9. Method according to any of the foregoing claims, wherein the telecommunication network is a cellular mobile radio network.

10. Telecommunication network for performing the method according to any of the foregoing method claims, wherein in the telecommunication network multiple network elements (2, 3) generate charge data sets (11, 13), although the charge data sets of one network element involved in the connection suffice for the charge determination of the connection, comprising
- a first network element (3) involved in the connection and configured to stipulate that only itself wants to send charge data sets to a charge determination means, and configured to send, to at least one further network element (2) of the telecommunication network involved in the connection, a message including an indication stating that only charge data sets originating from the first network element (3) are to be considered for a charge determination by a charge determination means,
- further network elements involved in the connection and configured to not send charge data sets (13) to the charge determination means (12) or to mark the charge data sets sent by themselves as not relevant based on the message, and
- a charge determination means (12) configured to consider only charge data sets originating from the first network element (3) for the determination of the charge for the at least one connection.

11. Network element (3) for a telecommunication network in which multiple network elements (2, 3) generate charge data sets (11, 13), although the charge data sets of one network element involved in the connection suffice for the charge determination of the connection, wherein the network element (3) involved in the connection is configured to stipulate that only itself wants to send charge data sets to a charge determination means, and is configured to send, to further network elements (2) involved in the connection, a message including an indication stating that only charge data sets originating from the first-mentioned network element (3) are to be considered for a charge determination by a charge determination means, such that further network elements (2) involved in the connection do not send charge data sets (13) to the charge determination means (12) or mark sent charge data sets (13) as not relevant, and such that a charge determination means considers only charge data sets originating from the network element for the determination of the charge for the connection.

## Revendications

1. Procédé de taxation pour au moins une liaison (8, 9, 10) via au moins un réseau de communication (2, 3),
plusieurs éléments de réseau (2, 3) du réseau de communication générant des jeux de données de facturation (11, 13), bien que les jeux de données de facturation d'un élément de réseau impliqué dans la liaison suffisent pour la taxation de la liaison ;
un seul élément de réseau (3) du réseau de communication impliqué dans la liaison et générant tous les jeux de données de facturation (11) requis pour la taxation de la liaison fixant que seul le premier élément de réseau (3) impliqué dans la liaison souhaite envoyer des jeux de données de facturation à un dispositif de taxation ;
le premier élément de réseau (3) impliqué dans la liaison informant ensuite de la fixation, au moyen d'un message d'établissement de liaison, au moins un autre élément de réseau (2) du réseau de communication impliqué dans la liaison ; et
les autres éléments de réseau (2) impliqués dans la liaison n'envoyant pas, sur la base du message, de jeux de données de facturation (13) au dispositif de taxation (12) ou les jeux de données de facturation (13) envoyés par les autres éléments de réseau (2) impliqués dans la liaison étant marqués comme non pertinents ; et
un dispositif de taxation (12) ne tenant compte, pour la taxation de l'au moins une liaison (8, 9, 10), que de jeux de données de facturation (13) provenant de celui (3) des éléments de réseau mentionné en premier lieu.

2. Procédé selon la revendication 1, **caractérisé en ce que** une information envoyée par un élément de réseau (2) à un dispositif de taxation (12) indique qu'un jeu de données de facturation (13) provenant des autres éléments de réseau (2) ne doit pas être pris en compte lors de la taxation dans le dispositif de taxation (12).

3. Procédé selon l'une des revendications précédentes, **caractérisé en ce que** le premier élément de réseau (3) envoie au dispositif de taxation (12) la non-pertinence de jeux de données de facturation provenant d'autres éléments de réseau (2).

4. Procédé selon l'une des revendications précédentes, **caractérisé en ce que** les autres éléments de réseau (2) n'envoient pas de jeux de données de facturation (13) au dispositif de taxation (12).

5. Procédé selon l'une des revendications précédentes, **caractérisé en ce que** le premier élément de réseau (3) envoie aux autres éléments de réseau (2) une information (6) représentant la mention que seuls des jeux de données de facturation (11) provenant du premier élément de réseau (3) sont à prendre en considération lors de la taxation et que les autres éléments de réseau (2) y réagissent selon l'une des revendications 2 et 4.

6. Procédé selon l'une des revendications précédentes, **caractérisé en ce que** le premier élément de réseau (3) envoie une information à l'occasion d'un établissement d'appel vers au moins un autre élément de réseau (2).

7. Procédé selon l'une des revendications précédentes, **caractérisé en ce que** le premier élément de réseau (3) est l'élément de réseau informé de l'établissement d'appel avant les autres éléments de réseau (2).

8. Procédé selon l'une des revendications précédentes, **caractérisé en ce qu'**un élément passerelle au niveau d'une passerelle vers un autre réseau de communication est le premier élément de réseau (3).

9. Procédé selon l'une des revendications précédentes, **caractérisé en ce que** le réseau de communication est un réseau radio mobile cellulaire.

10. Réseau de communication pour l'exécution du procédé selon l'une des revendications précédentes, plusieurs éléments de réseau (2, 3) générant des jeux de données de facturation (11, 13) dans le réseau de communication, bien que les jeux de données de facturation d'un élément de réseau impliqué dans la liaison suffisent pour la taxation de la liaison, comportant :
- un premier élément de réseau (3) impliqué dans la liaison, qui est conçu pour fixer que seul lui-même souhaite envoyer des jeux de données de facturation à un dispositif de taxation et qui est conçu pour envoyer à au moins un autre élément de réseau (2) du réseau de communication impliqué dans la liaison un message comportant une information indiquant que seuls des jeux de données de facturation provenant du premier élément de réseau (3) sont à prendre en considération lors d'une taxation dans un dispositif de taxation ;
- d'autres éléments de réseau impliqués dans la liaison, qui sont conçus pour ne pas envoyer, sur la base du message, de jeux de données de facturation (13) au dispositif de taxation (12) ou pour marquer (2) comme non pertinents les jeux de données de facturation qu'ils envoient ; et
- un dispositif de taxation (12) qui est conçu pour ne tenir compte, pour la taxation de l'au moins une liaison, que de jeux de données de facturation provenant du premier élément de réseau (3).

11. Élément de réseau (3) pour un réseau de communication dans lequel plusieurs éléments de réseau (2, 3) génèrent des jeux de données de facturation (11, 13), bien que les jeux de données de facturation d'un élément de réseau impliqué dans la liaison suffisent pour la taxation de la liaison, l'élément de réseau (3) impliqué dans la liaison étant conçu pour fixer que seul lui-même souhaite envoyer des jeux de données de facturation à un dispositif de taxation et étant conçu pour envoyer à d'autres éléments de réseau (2) impliqués dans la liaison un message comportant une information indiquant que seuls des jeux de données de facturation provenant du premier élément de réseau mentionné (3) sont à prendre en considération lors d'une taxation dans un dispositif de taxation, de sorte que d'autres éléments de réseau (2) impliqués dans la liaison n'envoient pas de jeux de données de facturation (13) au dispositif de taxation (12) ou marquent comme non pertinents des jeux de données de facturation (13) envoyés ou de sorte qu'un un dispositif de taxation ne tient compte, pour la taxation de la liaison, que de jeux de données de facturation provenant de l'élément de réseau.
